Europäisches Patentamt

European Patent Office

Office européen des brevets

(11) Publication number : **0 440 468 A2**

# EUROPEAN PATENT APPLICATION

(21) Application number : 91300754.8

(51) Int. Cl.⁵ : **B60Q 1/44**

(22) Date of filing : 31.01.91

(30) Priority : 31.01.90 GB 9002143

(43) Date of publication of application :
07.08.91 Bulletin 91/32

(84) Designated Contracting States :
DE FR GB IT SE

(71) Applicant : Mccarthy, Stephen Paul
Grange Cottage, Shipton Road
Skelton, York Y03 6XW, North Yorkshire (GB)

(72) Inventor : Mccarthy, Stephen Paul
Grange Cottage, Shipton Road
Skelton, York Y03 6XW, North Yorkshire (GB)

(74) Representative : Overbury, Richard Douglas et
al
Haseltine Lake & Co Hazlitt House 28,
Southampton Buildings Chancery Lane
London WC2A 1AT (GB)

(54) Indicating system for a vehicle.

(57) A deceleration-indicating system for a vehicle comprises a sensor 1 and a control unit 2 for operating an indicating means such as the brake light 4 in response to the output of the sensor. The sensor 1 detects directly the speed of the vehicle and the control unit 2 turns on the indicating means when the output of the sensor corresponds to a predetermined deceleration condition of the vehicle. The sensor 1 may be an inductive pickup inserted in the tachometer drive. The control unit 2 processes the pulses induced in the pickup to produce a voltage proportional to the deceleration, which if positive sets off a relay 3 to activate the brake light 4.

EP 0 440 468 A2

FIG. 1

# INDICATING SYSTEM FOR A VEHICLE

The invention is connected with systems for use in road vehicles for giving a warning signal to other vehicles approaching from the rear.

Conventional brake lights, mounted at the rear of the vehicle, are turned on when the brakes are operated and turned off again when the brake pedal is released. While this gives an indication to other road users behind, particularly vehicles, that the vehicle in front is slowing down, it is possible to improve the safety of indicating systems, and many attempts have been made to do this.

For instance US 3702459 shows a vehicle having four indicator lights. When the brakes are applied four lights go on, while if the vehicle simply decelerates, e.g. upon release of the accelerator, two lights go on. Deceleration is detected by a mechanical switch with a spring bias which is overcome above a certain deceleration. There is also a switch which causes the device to operate only when the vehicle is travelling above a certain speed.

US 4470036 likewise shows, in Figure 3, a mechanical acceleration detector which is connected so as to light the green light when the car is accelerating and the red light when it is decelerating.

As a final example reference is made to EP 235890, which shows a device using a mercury switch to activate the normal brake lights when the car decelerates.

All these devices use a mechanical sensor to detect acceleration or deceleration by physical means. Such sensors are not always suitable for use in vehicles, and in addition they can at times give an unwanted signal, for instance when the vehicle is travelling downhill (in the case of a deceleration indicator), or fail to give one when the vehicle is travelling uphill. It is therefore an object of the invention to improve the reliability of such indicating systems.

According to the invention there is provided an indicating system for a vehicle, comprising a sensor and a control unit for operating an indicating means in response to the output of the sensor, characterised in that the sensor is adapted to detect directly the speed of the vehicle and the control unit is adapted to turn on the indicating means when the output of the sensor corresponds to a predetermined deceleration condition of the vehicle.

This system of indicating is different in kind from the known brake light system which responds to a parameter not directly connected with the drive of the vehicle, such as the depression of the brake pedal. The indicating means of the invention responds to a current condition of the vehicle drive and not in the first place to the position of an operating member, such as the brake pedal. This means that an indication is given according to actual slowing-down of the vehicle, for instance, rather than to the driver's intentions or lack of them.

An advantage of systems according to the invention in comparison with the usual brake light system is that a signal is given as soon as deceleration takes place, thus anticipating the brake light signal and giving more timely warning in the case where the driver takes his foot off the accelerator pedal to put it on the brake pedal. Also, the system will give a useful signal where the standard brake light arrangement gives none, as when the driver releases the accelerator pedal, thus slowing the vehicle, but does not press the brake at all.

Further, in contrast to the systems cited above which are sensitive directly to acceleration, the system of the invention is not sensitive to extraneous deceleration signals, such as arise from the inclination or unevenness of the road surface, but depends only on the actual road speed of the vehicle.

The sensor means may be connected to the drive already present for the tachometer, or to the ABS sensor if fitted, or conceivably it may measure road speed directly by reflection from the road surface.

Preferably the sensor counts revolutions of the final drive system emitting electrical pulses which are then electronically processed by the control unit to give readings for speed and/or acceleration in either analogue or digital fashion ; these readings are then used to light the indicator in appropriate circumstances. In preferred embodiments the sensor is an inductive pickup of generally known type where the rotation of a shaft connected to the tachometer drive is detected by the generation of pulses as the teeth of a cogwheel mounted on the shaft rotate past a magnetic means in the sensor.

The control unit may be adapted to turn on the indicating means immediately on receipt of the appropriate signal from the sensor and to keep the indicating means operating for a fixed time after that, such as for one to two seconds, whereupon the control unit sends a signal for switching off the indicator. This helps to avoid any tendency to rapid fluctuation of the indicating signal if the sensor is particularly sensitive.

Advantageously the indicating means is the brake light already fitted on normal vehicles, though it may be an additional light. If the existing brake light and wiring is used then the normal brake light signal should be arranged to override the deceleration signal in the case mentioned above where the control unit turns off the brake light after a predetermined time, so that the function of the brake light for indicating whether the brakes are being applied is not disrupted. This can be done, for instance, if the control means includes a relay for switching the brake light on and off, by ensuring that the brake light signal wiring is connected to the wiring between the relay and the brake light. Malfunction of the relay cannot then interfere with the brake indication, while the need for a separate wiring circuit all the way to the brake light is avoided.

In some embodiments the control unit could be arranged so as not to activate the indicating means unless the vehicle speed is above a certain value, so as to avoid giving unnecessary indications in certain circumstances, such as in slow-moving traffic. The safety aspect is particularly important on motorways, for instance, at speeds over 50 mph (80 km/h). Alternatively or additionally the indication could be likewise disabled if the vehicle travels above a given speed.

Similarly, the 'predetermined deceleration condition' may be any detected deceleration above zero, or there may be a threshold value, only deceleration tendencies above this leading to operation of the indicating means. This avoids unwanted indication if the rate of deceleration is so small as to be insignificant, as when, during cruising, the actual speed of the vehicle varies slightly.

An embodiment of the invention will now be described, by way of example, with reference to the accompanying drawings, in which :

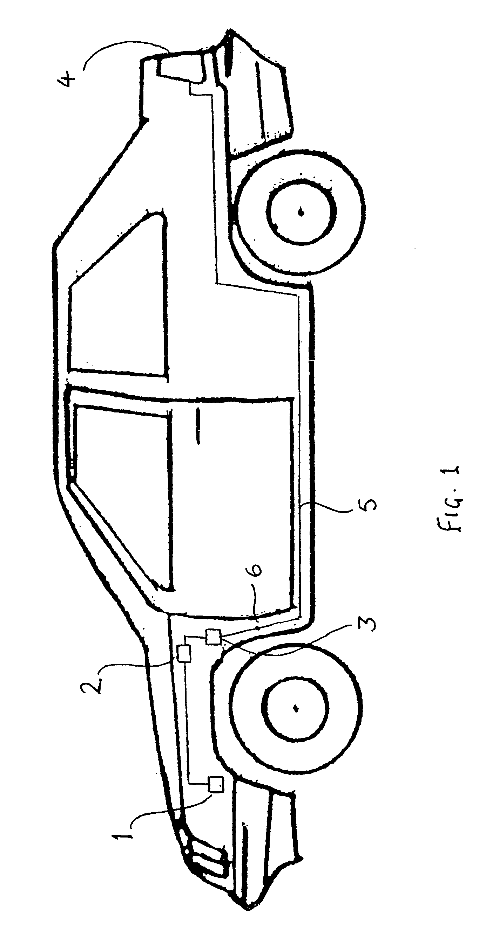

Fig. 1 shows a vehicle fitted with an indicating system representing an embodiment of the invention ;

Fig. 2 shows the general layout of the control unit of the embodiment of Fig.1 ;

Fig. 3 shows a circuit diagram corresponding to Fig. 2 ; and

Fig. 4 shows views of a sensor unit in accordance with the invention.

A vehicle has a speed sensor 1 connected to the output shaft of the gearbox so as to receive a signal indicative of the speed of the vehicle. The sensor itself sends a signal to a control unit 2. The control unit 2 monitors the speed signal from the sensor 1 and closes a relay 3 between the electrical system (not shown) and the brake light 4 via the brake light wiring 5 if the measured value of speed decreases, i.e. if an actual deceleration of the vehicle is measured.

In operation, if the vehicle is accelerating or travelling at a steady speed the control unit 2 holds the relay 3 open ; if the output of the detector 1 indicates a reduction in speed, however, the computer closes the relay 3 and the brake light is operated. This would normally occur on braking, in any case, but if the driver for some reason delays operation of the brake and merely reduces the pressure on the accelerator pedal the vehicle will slow down and the detection system will immediately respond to this deceleration without the brake pedal being pressed. This gives a more advanced warning to vehicles behind than a system which responds only to operation of the brake pedal.

The control unit 2 can be so arranged as to hold the relay 3 closed for one or two seconds following the initial deceleration signal. At the end of this period the computer sends a signal to open the relay, cutting off the connection from the electrical system, and once more becomes sensitive to the output of the sensor. Alternatively, the control unit could be arranged to become sensitive again only a certain time, such as one second, after the light has gone off, in order to avoid the appearance of the brake light flashing during continuous deceleration. However, the signal from the brake pedal should at all times override the signal from the control unit 2 so that the brake light warning system is not impaired ; this can conveniently be done by connecting the standard brake light signal to a point 6 on the wiring 5 downstream of the relay 3.

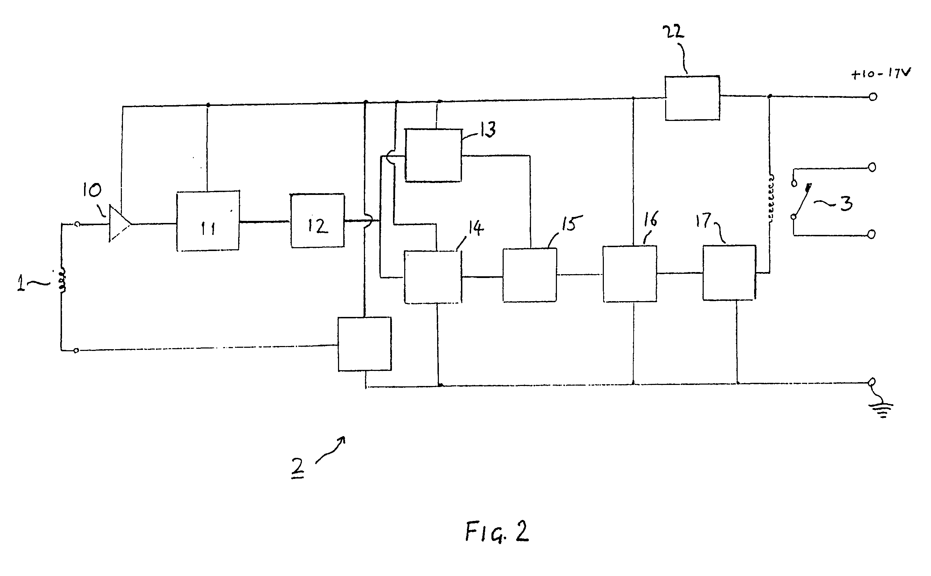

Fig. 2 shows the functional layout of a suitable control unit 2. The signal from the speed transducer is fed into the clipping amplifier 10. The output from the amplifier 10 is a square wave of approximately 8 volts peak to peak, the rate and duration of which vary with the speed of the vehicle. This output signal is now processed by a monostable 11, producing pulses of constant duration varying in rate as the speed of the vehicle varies. The output from the monostable 11 feeds a filter 12 containing a diode pump circuit which results in a smooth deceleration potential at its output, dependent on the speed of the vehicle.

The output of the filter 12 is fed both to a speed threshold detector 13 and to a deceleration detector 14. The speed threshold detector 13 controls a gate 15 located between the output of the deceleration detector 14 and a timer 16. Hence only at speeds above the set point of the speed threshold detector does the gate 15 enable the output signal from the deceleration detector 14 to reach the timer 16.

The timer output activates a relay driver 17 which drives the relay 3 ; the relay 3, on closing the circuit between terminals 19 and 20, causes the deceleration light to be illuminated. The timer once set off energises the relay 3 for the full time period. Should the deceleration period exceed that of the timer period then the relay 3 will repeatedly be energised and deenergised for equal periods ; thus the brake lights will be switched on and off as the vehicle decelerates.

The control unit 2 is optionally designed to be less sensitive to deceleration immediately after a period of acceleration ; this prevents the brake lights illuminating unnecessarily when the driver is changing up normally through the gears.

The control unit includes a voltage regulator 22 powered from the nominal 12-volt supply and producing a constant supply for the electronics within the relay ; this prevents erratic operation as the load on or the charge condition of the vehicle battery varies.

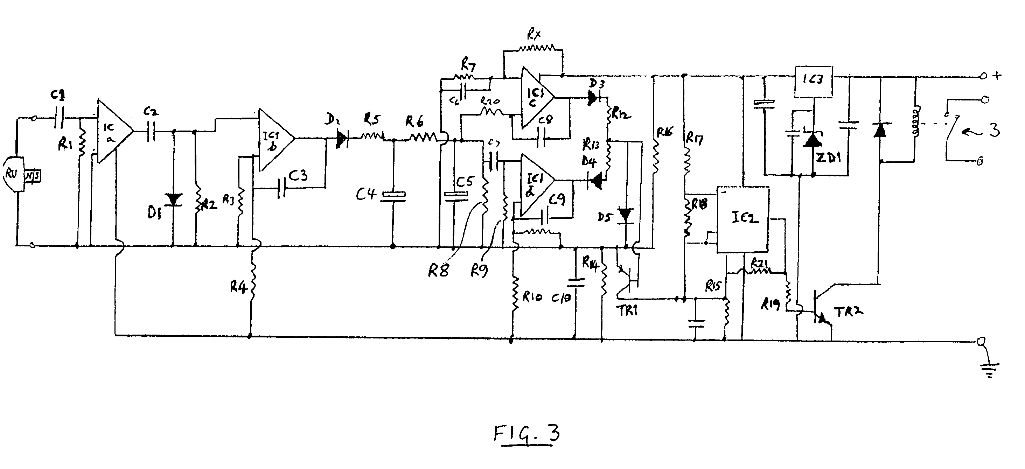

Fig. 3 shows the circuit diagram of the relay module of the electronic deceleration monitor. The signal from the sensor, here a tachometer cable transducer 1, is fed into the input terminals of the module and appears across resistor R1, capacitor C1 removing any DC component from the incoming signal. The operational amplifier IC1a is used with an open loop, which results in an output squarewave of approximately 8 volts peak to peak.

The positive transitions of this signal are removed by diode D1, capacitor C2 giving DC isolation, so that a signal consisting of negative spikes appears across resistor R2. The operational amplifier IC1b operates as a monostable giving a positive pulse, of a duration set by R3, each time the inverting input goes negative. Resistor R4 holds the non-inverting input negative between pulses, ensuring stable operation and constant pulse amplitude and length. The output from IC1b feeds the diode pump and DC filter formed by D2, R5, C4, R6 and C5, resulting in a DC voltage proportional to speed being applied across R8. This DC voltage is monitored by two operational amplifiers IC1c, IC1d.

Operational amplifier IC1c is the main component of the speed threshold detector 13 of Fig.2 and operates as a voltage comparator, the point at which the output goes negative being set by the values of R7 and Rx. Altering Rx gives differing values of the speed below which a deceleration signal is not given. for instance, values of 22k, 27k and 33 kΩ give speed values of 50, 40 and 30 mph, respectively (80, 64 and 48 km/h). Capacitor C8 prevents the comparator reacting to noise. At speeds below, say, 40 mph (64 km/h) the output is positive, thus holding TR1 on via D3 and R12.

Operational amplifier IC1d represents the heart of the deceleration detector 14. It responds only to changes in the level of the DC signal since C7 isolates its input from the DC signal. The inverting input to this operational amplifier is held slightly negative via R10 and R11. C9 prevents IC1d from reacting too quickly. As the inverting input is held negative the output will be positive. During acceleration the input to IC1d will go positive but as the output is positive this will have no effect. During deceleration the input to IC1d will go negative resulting in the output from IC1d going negative. If the vehicle is travelling above 64 km/h then TR1 will turn on enabling the 2-second mark space astable formed by IC2. The output from IC2 operates the relay drive transistor TR2. IC3 and ZD1 stabilize the voltage supply for IC1 and IC2 at a constant 9v DC. The contact on the relay 18 switches on the brake lights.

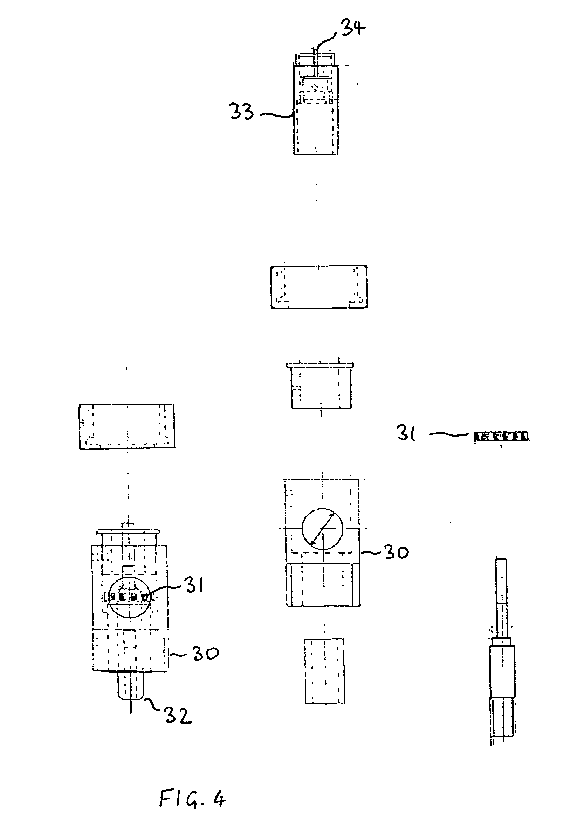

Fig. 4 shows assembled and in exploded view a compact unit for fitting in to the line from the gearbox to the rpm indicator. The housing 30 is generally tubular and forms a T-shape with a leg part 33. A toothed wheel 31 is mounted in the main housing 30 on the rotating shaft 32 so that the rate at which the teeth pass a current-carrying coil located in the stem 33 of the T is proportional to the rotational speed of the shaft. The point of a pin 34 connected to the coil faces the teeth of the wheel 31 as they pass, thus varying the magnetic flux circuit and producing the electric pulses. Output pulses are thus induced whose frequency is proportional to the speed of the vehicle.

This type of sensor is known per se, for instance in washing machines. Other kinds of sensors could be used within the scope of the invention, such as sensors giving an analogue output representing vehicle speed. Conversely the control unit could operate purely digitally, calculating deceleration on the basis of the speed detected and a timer output.

## Claims

1. Indicating system for a vehicle, comprising a sensor (1) and a control unit (2) for operating an indicating means (4) in response to the output of the sensor, characterised in that the sensor (1) is adapted to detect directly the speed of the vehicle and the control unit (2) is adapted to turn on the indicating means when the output of the sensor corresponds to a predetermined deceleration condition of the vehicle.

2. Indicating system according to claim 1, in which the sensor (1) generates electrical pulses at a rate proportional to the vehicle speed and these pulses are electronically processed by the control unit (2).

3. Indicating system according to claim 2, in which the sensor (1) is an inductive pickup including a shaft (32) to be connected to the vehicle drive and a cogwheel (31) mounted on the shaft (32) so as to rotate past a magnetic means in the sensor and induce the said pulses.

4. Indicating system according to any preceding claim, in which the control unit (2) includes a disabling device (13,15) so that, in use, the indicating means (4) is not activated unless the vehicle speed is above a certain value.

5. Indicating system according to any preceding claim, in which the control unit (2) includes a timer (16) for keeping the indicating means on for a predetermined period following the initial detection of the deceleration condition.

6. A vehicle including an indicating system as claimed in any preceding claim.

7. A vehicle as claimed in claim 6, in which the sensor (1) is connected to the output from the gearbox.

8. A vehicle as claimed in claim 7, in which the sensor (1) is inserted in the tachometer drive.

FIG. 1

Fig. 2

FIG. 3

FIG. 4